# EUROPÄISCHE PATENTSCHRIFT

(11) **EP 1 462 310 B1**
(45) Veröffentlichungstag und Bekanntmachung des Hinweises auf die Patenterteilung: **28.10.2009**
(21) Anmeldenummer: 04004783.9
(22) Anmeldetag: 02.03.2004
(51) Int. Cl.: B60Q 1/14

(54) **Lenksäulenmodul**
Steering column module
Module de colonne de direction

(30) Priorität: 24.03.2003 DE 10313816
(43) Veröffentlichungstag der Anmeldung: 29.09.2004
(73) Patentinhaber: Valeo Schalter und Sensoren GmbH, 74321 Bietigheim-Bissingen (DE)
(72) Erfinder: Horst, Daniel, 74321 Bietigheim-Bissingen (DE); Mozer, Reiner, 71665 Vaihingen/Enz (DE)
(74) Vertreter: Vötsch, Reiner

(56) Entgegenhaltungen:
- EP-A- 0 861 753
- DE-A1- 4 305 827
- JP-A- 9 120 754
- JP-U- 58 066 524
- US-A- 4 404 438
- US-A- 4 564 732

## Beschreibung

Die Erfindung betrifft ein Lenksäulenmodul, insbesondere für Kraftfahrzeuge mit einem auf die Lenksäule aufsetzbaren Modulträger und mit mindestens einem Betätigungsmodul, wobei der Modulträger mindestens einen zur Aufnahme eines Betätigungsmoduls geeigneten Aufnahmebereich aufweist, und wobei das Betätigungsmodul einen Eingriffsbereich zum Eingriff in den Aufnahmebereich des Modulträgers aufweist.

Ein derartiges Lenksäulenmodul ist bekannt aus der DE 196 27 767 A1. Dort ist ein Lenkstockschaltersystem beschrieben, das aus mehreren Funktionsmodulen aufgebaut ist, wobei einzelne Funktionsmodule einfach austauschbar sind.

Ein gattungsgemäßes Lenkungsmodul für Kraftfahrzeuge mit auf die Lenksäule aufsetzbarem Modulträger und korrespondierenden Betätigungsmodulen ist jeweils aus den Druckschriften der JP 58 066524 U , EP 0 861 753 A2 und JP 58 066524 U bekannt. Der Modulträger weist dabei für jedes Betätigungsmodul einen zugehörigen Aufnahmebereich auf, in dem Modulträger und Betätigungsmodul eine Nut-Feder Verbindung bilden. Zur Sicherung der Verbindung zwischen Betätigungsmodul und Modulträger sind in der JP 58 066524 U und der EP 0 861 753 A2 jeweils Rastverbindungsmittel vorgesehen, die beim Einführen des Betätigungsmodul in den Aufnahmebereich des Modulträgers selbsttätig einrasten.

Die JP 58 066524 U beschreibt eine Sicherung über Schrauben, die jeweils eine zugehörige Öffnung in der freien Stirnseite des Betätigungsmoduls durchsetzten und seitlich mit dem Modulträger verschraubt sind.

Der vorliegenden Erfindung liegt die Aufgabe zugrunde, die Schnittstelle zwischen Modulträger und Betätigungsmodul derart weiterzubilden, dass die Montage des Betätigungsmoduls am Modulträger möglichst einfach ist und eine zuverlässige Verbindung zwischen Modulträger und Betätigungsmodul herstellbar ist.

Diese Aufgabe wird dadurch gelöst, dass das Sicherungselement, mit dem die Verbindung zwischen Betätigungsmodul und Modulträger sicherbar ist, eine die Nut bildende Wandung durchsetzt und in der Feder zumindest abschnittsweise aufgenommen ist.

Der Aufnahmebereich des Modulträgers und der Eingriffsbereich des Betätigungsmoduls bilden eine Nut-Feder-Verbindung bilden. Die Nut-Feder-Verbindung hat den Vorteil, dass sich die Montage besonders einfach gestaltet, indem die an einem der beiden Bauteile Modulträger oder Betätigungsmodul vorgesehene Feder in die am jeweils anderen Bauteil, also am Betätigungsmodul oder am Modulträger vorgesehene Nut, einschiebbar ist. Bei entsprechender Orientierung von Nut und Feder kann die Montage des Betätigungsmoduls am Modulträger aus zur Lenksäule senkrechter Richtung erfolgen. Eine Demontage des Betätigungsmoduls vom Modulträger erfolgt durch einfaches Entfernen des Betätigungsmoduls in bezogen auf den Modulträger nach außen radialer Richtung. Dies ist insbesondere dann vorteilhaft, wenn am Lenksäulenmodul weitere Bauteile, wie Lenkrad oder Airbag montiert sind.

Durch die Nut-Feder-Verbindung kann außerdem eine besonders zuverlässige Verbindung zwischen dem Betätigungsmodul und dem Modulträger hergestellt werden, da die Feder mit vielen und vergleichsweise großen Kontaktflächen in der Nut gehalten werden kann.

Nach einer vorteilhaften Ausführungsform weist der Aufnahmebereich des-Modulträgers eine Schwalbenschwanz- oder eine T-Nut auf, in die das Betätigungsmodul mit seiner als Feder für die Nut ausgebildeten Eingriffsbereich einführbar ist. Es ist auch möglich, dass der Eingriffsbereichs des Betätigungsmoduls eine Schwalbenschwanz- oder T-Nut aufweist, in die der als Feder für die Nut ausgebildete Aufnahmebereich des Modulträgers einführbar ist. Die Ausführung der Nut der Nut-Feder-Verbindung als Schwalbenschwanz- oder T-Nut hat den Vorteil, dass die Feder in fünf Freiheitsgraden gegenüber der Nut festlegbar ist. Bei Ausführung der Nut in T-Form kann die Feder durch den Boden der Nut, die beiden seitlichen Wangen, sowie die sich daran erstreckenden abgewinkelten Schenkel abgestützt und somit die Feder zumindest bereichsweise umgriffen werden. Bei Ausgestaltung der Nut als Schwalbenschwanz kann die Feder durch den Boden der Nut sowie durch die schräg gestellten seitlichen Wangen umgriffen und gehalten werden. Die Feder kann für den Einsatz in eine T-Nut einen im Wesentlichen rechteckförmigen Querschnitt aufweisen und für den Einsatz in eine Schwalbenschwanznut eine entsprechende Trapezform aufweisen.

Nach einer Weiterbildung der Erfindung weist die Nut einen Anschnäbelabschnitt und einen an diesen angrenzenden Zentrierabschnitt auf, wobei der Anschnäbelabschnitt eine größere Nutweite und/oder Nutbreite als der Zentrierabschnitt aufweist. Die Feder kann einen Anfangsabschnitt und einen an diesen angrenzenden Endabschnitt aufweisen, wobei der Anfangsabschnitt im Wesentlichen spielfrei im Zentrierabschnitt aufnehmbar ist und der Endabschnitt kleiner als der Anschnäbelabschnitt ist. Diese Ausführung hat den Vorteil, dass die Feder zunächst mit ihrem Anfangsabschnitt in den Anschnäbelabschnitt der Nut einführbar ist und zwar ohne dass bereits eine exakte Positionierung von Modulträger und Betätigungsmodul erfolgen muss, da der Anschnäbelabschnitt eine größere Nutweite und/oder Nutbreite als der Zentrierabschnitt der Nut aufweist. Nachdem das freie Ende des Anfangsabschnitts der Feder vollständig in den Anschnäbelabschnitt der Nut eingeführt ist, kann der Anfangsabschnitt der Feder in den Zentrierabschnitt der Nut eingeführt werden. Dort ist der Anfangsabschnitt der Feder im Wesentlichen spielfrei im Zentrierabschnitt aufgenommen. Im Wesentlichen spielfrei bedeutet, dass die bei der Herstellung üblichen Toleranzen zumindest bei der Montage von Betätigungsmodul und Modulträger eine Spiel-, eine Übergangs- oder eine Presspassung des Anfangsabschnitts der Feder und des Zentrierabschnitts der Nut erlauben.

Der Anschnäbelabschnitt weist eine größere Nutweite und/oder Nutbreite auf, als der Zentrierabschnitt. Dies bedeutet beispielsweise, dass der Abstand der Wangen der Nut, also die Nutbreite im Bereich des Anschnäbelabschnitts größer ist als im Bereich des Zentrierabschnitts. Optional oder zusätzlich kann auch die Höhe der Wangen selbst, also die Nutweite, derart variiert werden, dass diese im Bereich des Anschnäbelabschnitts größer sind als im Bereich des Zentrierabschnitts.

Beispielsweise ist bei Ausführung der Nut in T-Form der Abstand der von den Wangen der Nut abstehenden Schenkel zum Boden der Nut im Anschnäbelabschnitt größer als im Zentrierabschnitt. Bei Ausführung der Nut als Schwalbenschwanz kann beispielsweise der Winkel zwischen den gegenüber dem Boden der Nut schräg orientierten Wangen derart variiert werden, dass dieser im Bereich des Anschnäbelabschnitts größer ist als im Bereich des Zentrierabschnitts.

Die Feder kann im Prinzip als Element vorgesehen sein, dessen Querschnitt entlang seiner Länge nicht variiert. Dies bedeutet, dass der Anfangsabschnitt der Feder und der Endabschnitt der Feder ohne Geometriewechsel ineinander übergehen können. Wesentlich ist, dass die Geometrien so gewählt sind, dass die Feder zumindest abschnittsweise in die Nut einführbar ist. Der Endabschnitt der Feder kann im Wesentlichen spielfrei, also mit einer Spiel-, einer Übergangs- oder einer Presspassung im Anschnäbelabschnitt der Nut aufgenommen sein.

Zur Unterstützung des Einführvorgangs der Feder in die Nut kann vorgesehen sein, dass der Zentrierabschnitt und/oder der Anschnäbelabschnitt der Nut und/oder der Anfangsabschnitt und/oder der Endabschnitt der Feder konisch ausgebildet sind. Durch die konische Ausbildung einzelner oder mehrerer Abschnitte der Nut und/oder der Feder wird der Einführvorgang der zunächst nicht unbedingt exakt relativ zur Nut positionierten Feder unterstützt.

Beispielsweise sind der Anschnäbelabschnitt der Nut und der Endabschnitt der Feder konisch ausgebildet. Somit kann zunächst der Anfangsabschnitt der Feder in den bezogen auf den Anfangsabschnitt größeren Anschnäbelabschnitt der Nut eingeführt werden, wobei mit zunehmender Einführtiefe der Anfangsabschnitt in dem konisch ausgebildeten Anschnäbelabschnitt geführt wird, bis das freie Ende des Anfangsabschnitts der Feder in den Zentrierabschnitt der Nut eintritt. Vorteilhafterweise gehen der konisch ausgebildete Anschnäbelabschnitt der Nut und der daran angrenzenden Zentrierabschnitt ohne schroffe Geometriewechsel ineinander über, so dass das freie Ende des Anfangsabschnitts der Feder ohne Verkanten vom Anschnäbelabschnitt in den Zentrierabschnitt eintreten kann. Der konisch ausgebildete Endabschnitt der Feder ist vorteilhafterweise komplementär zum konisch ausgebildeten Anschnäbelabschnitt der Nut ausgebildet, so dass auch der Endabschnitt der Feder spielfrei im Anschnäbelabschnitt der Nut aufnehmbar ist.

In weiterer Ausgestaltung der Erfindung weisen der Anschnäbelabschnitt der Nut und/oder der Anfangsabschnitt der Feder Einführhilfen bildende Fasen auf. Somit kann die Montage des Betätigungsmoduls am Modulträger noch zusätzlich erleichtert werden, da das Betätigungsmodul und der Modulträger entsprechend der Größe der Fasen relativ ungenau zueinander positioniert werden können und trotzdem eine Einführung der Feder in die Nut ermöglicht ist.

In weiterer Ausbildung der Erfindung weist der Modulträger elektrische Kontaktmittel auf, die dem Betätigungsmodul zugewandt sind. Das Betätigungsmodul kann elektrische Kontaktmittel aufweisen, die dem Modulträger zugewandt sind.

Durch die einander zugewandten Kontaktmittel kann zusätzlich zu der über die Nut-Feder-Verbindung realisierte mechanische Verbindung von Modulträger und Betätigungsmodul eine elektrische Verbindung hergestellt werden. Die Kontaktmittel können beispielsweise in Form eines Steckers und einer entsprechenden Steckeraufnahme ausgebildet sein.

Vorteilhafterweise erfolgt die elektrische Kontaktierung des Betätigungsmoduls und des Modulträgers mit oder sich an die Einführung des Eingriffsbereichs in den Aufnahmebereich anschließend. Beispielsweise kann die Feder in die Nut eingeführt werden und eine elektrische Kontaktierung zwischen Betätigungsmodul und Modulträger erfolgen, während die Feder das letzte Stück ihres Einführwegs innerhalb der Nut zurücklegt. Vorteilhafterweise sind die elektrischen Kontaktmittel derart ausgebildet, dass die Fügerichtung der Kontaktpartner und die Einführrichtung der Feder in die Nut parallel zueinander sind.

Ganz besonders vorteilhaft ist es, wenn die elektrische Kontaktierung nach Beginn der Einführung des Anfangsabschnitts der Feder in den Zentrierabschnitt der Nut erfolgt. Dadurch, dass der Anfangsabschnitt der Feder bereits im Wesentlichen spielfrei im Zentrierabschnitt der Nut aufgenommen ist, kann die Feder nur in einer zur Längsrichtung der Nut-Feder-Verbindung parallelen Richtung weiter in die Nut eingeschoben werden. Bei Ausrichtung der elektrischen Kontaktmittel in zur Längsrichtung der Nut-Feder-Verbindung paralleler Lage können die Kontaktpartner der elektrischen Kontaktmittel bereits vor Kontaktschluss exakt zueinander ausgerichtet werden. Somit kann ein gegenseitiges Verkanten der Kontaktpartner und/oder eine Beschädigung derselben vermieden werden.

Nach einer Weiterbildung der Erfindung sind benachbart zu elektrischen Kontaktmitteln oder in diese räumlich integriert Zentriermittel vorgesehen. Diese Zentriermittel können beispielsweise durch eine Zentrierhülse ausgebildet sein, in die ein Zentrierstift für einen axialen Eingriff bestimmt ist. Es ist unerheblich, ob die Zentrierhülse am Betätigungsmodul und der Zentrierstift am Modulträger oder ob die Zentrierhülse am Modulträger und der Zentrierstift am Betätigungsmodul angeordnet sind. Die Zentriermittel können in die elektrischen Kontaktmittel integriert oder vorzugsweise benachbart zu diesen angeordnet sein.

Beispielsweise kann ein Zentrierstift in einem Steckerbereich vorgesehen sein, der in eine Zentrierhülse eingreift, die in einen Steckeraufnahmebereich integriert ist.

Gemäß der Erfindung ist ein Sicherungselement vorgesehen, mit dem die Verbindung zwischen Betätigungsmodul und Modulträger sicherbar ist. Das Sicherungselement durchsetzt dabei eine die Nut bildende Wandung und ist in der Feder zumindest abschnittsweise aufgenommen. Ein solches Sicherungselement kann bspw. als Schraube oder als Rastverbindung ausgebildet sein.

Nach einer möglichen Ausführungsform ist das Betätigungsmodul als Lenkstockschalter ausgebildet. Beispielsweise können zwei Lenkstockschalter vorgesehen sein, die jeweils mit einer Feder ausgestattet sind, die zum Eingriff in zwei an einem Modulträger vorgesehene Nuten bestimmt sind.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Zeichnung zeigt:
- Figur 1: einen perspektivischen Ausschnitt eines Lenksäulenmoduls mit einem Modulträger und einem Betätigungsmodul in einem Vormontagezustand;
- Figur 2: eine geschnittene Seitenansicht des Lenksäulenmoduls gemäß Figur 1 in einem ersten Zwischenmontagezustand;
- Figur 3: eine geschnittene Seitenansicht des Lenksäulenmoduls gemäß Figur 1 in einem zweiten Zwischenmontagezustand;
- Figur 4: eine geschnittene Seitenansicht des Lenksäulenmoduls gemäß Figur 1 in einem Endmontagezustand; und
- Figur 5: einen perspektivischen Ausschnitt des Lenksäulenmoduls gemäß Figur 1 mit einem Sicherungselement.

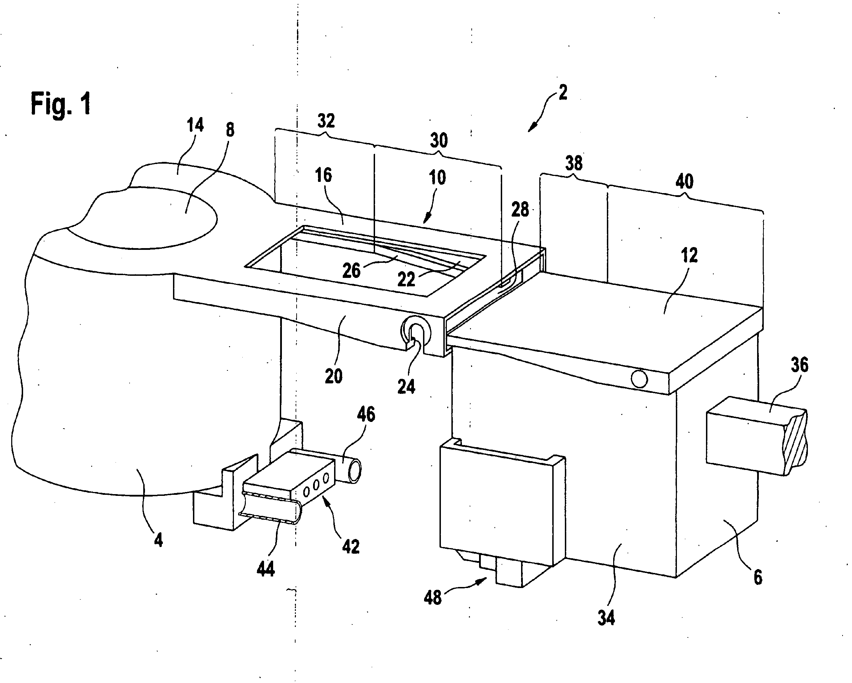

Das in Figur 1 allgemein mit dem Bezugszeichen 2 bezeichnete Lenksäulenmodul weist einen Modulträger 4 auf, der seitlich mit einem als Lenkstockschalter 6 ausgebildeten Betätigungsmodul verbindbar ist. Der Modulträger 4 weist eine zentrale zylindrische Öffnung 8 auf, mit der der Modulträger 4 auf eine nicht dargestellte Lenksäule aufsetzbar ist. An dem Modulträger 4 ist ein als Nut 10 ausgebildeter Aufnahmebereich vorgesehen, der zum Eingriff eines als Feder 12 ausgebildeten Eingriffsbereichs des Lenkstockschalters 6 geeignet ist.

Der Modulträger 4 weist ein die zentrale Öffnung 8 bildendes Gehäuse 14 auf, an das sich in Figur 1 oben dargestellt die Nut 10 anschließt. Die Nut 10 ist im Querschnitt T-förmig. Der Boden der Nut 10 ist von einem flächigen Rahmen 16 gebildet. An den Rahmen 16 schließen sich in senkrechter Richtung Seitenwangen 20 und 22 an. Von den Seitenwangen 20 und 22 erstrecken sich Schenkel 24 und 26, die parallel zum flächigen Rahmen 16 und senkrecht zu den Seitenwangen 20 und 22 angeordnet sind. Der flächige Rahmen 16 und die Seitenwangen 20 und 22 sowie die Schenkel 24 und 26 begrenzen am freien Ende des Aufnahmebereichs 16 eine Einführöffnung 28, in die die Feder 12 des Betätigungsmoduls 6 einschiebbar ist. Die Einführöffnung 28 begrenzt einen sich in Längsrichtung der Nut 10 erstreckenden Anschnäbelabschnitt 30, der an einen Zentrierabschnitt 32 angrenzt und in diesen übergeht. Der Zentrierabschnitt 32 erstreckt sich zwischen dem Anschnäbelabschnitt 30 und dem Gehäuse 14 des Modulträgers 4.

Der Lenkstockschalter 6 ist im Wesentlichen aus einem Block 34 gebildet, in dem eine abschnittsweise dargestellte Griffstange 36 des Lenkstockschalters 6 aufgenommen ist. In Figur 1 oberhalb des Blocks 34 ist die Feder 12 des Lenkstocksschalters 6 vorgesehen. Die Feder 12 ist im Wesentlichen durch eine Platte gebildet, die einen Anfangsabschnitt 38 umfasst, dessen Querschnitt eine in Längsrichtung der Nut 10 gesehen konstante Dicke aufweist. An den Anfangsabschnitt 38 der Feder 12 schließt sich ein Endabschnitt 40 an, der vom Anfangsabschnitt 38 beginnend in Richtung der Griffstange 36 eine zunehmende Dicke aufweist, so dass der Endabschnitt 40 ein konisches Profil aufweist.

Am Modulträger 4 sind in Figur 1 unten dargestellt weibliche elektrische Kontaktmittel 42 vorgesehen sind. Benachbart zu den Kontaktmitteln 42 sind Zentrierhülsen 44 und 46 vorgesehen. Die Zentrierhülse 44 ist in Figur 1 geschnitten dargestellt.

In Figur 1 sind am Block 34 des Lenkstockschalters vorgesehene männliche elektrische Kontaktmittel 48 angedeutet, die zum Eingriff in die weiblichen elektrischen Kontaktmittel 42 geeignet sind.

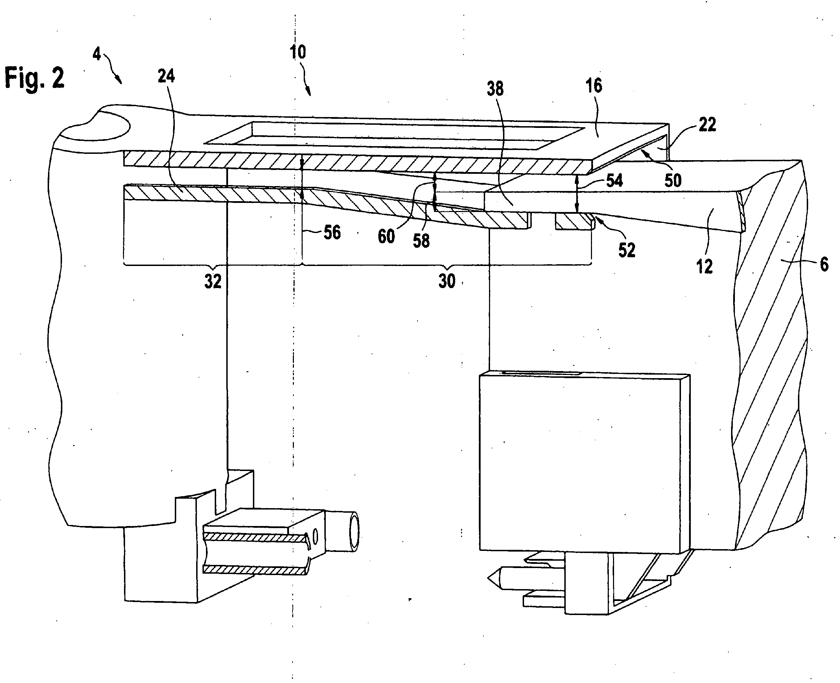

In Figur 1 sind der Modulträger 4 und der Lenkstockschalter 6 relativ derart zueinander ausgerichtet, dass die Feder 12 in die Nut 10 einführbar ist. Der Einführvorgang der Feder 12 in die Nut 10 ist in Figur 2 in einem ersten Zwischenmontagezustand dargestellt. Die Feder 12 ist mit ihrem Anfangsabschnitt 38 teilweise in den Anschnäbelabschnitt 30 der Nut 10 eingeführt. Zur Unterstützung des Einführvorgangs sind am flächigen Rahmen 16 der Nut 10 beziehungsweise am Schenkel 24 (sowie am Schenkel 26, jedoch durch die Feder 12 verdeckt) Fasen 50 und 52 vorgesehen, die eine Einführhilfe für den Anfangsabschnitt 38 der Feder 12 bilden.

Der Anschnäbelabschnitt 30 der Nut 10 weist an seinem der Feder 12 zugewandten Ende eine Nutweite 54 auf, die sich in Richtung zum Modulträger 4 hin auf die Nutweite 56 des Zentrierabschnitts 32 verengt. Der Anfangsabschnitt 38 weist eine Dicke 58 auf, die kleiner ist als die Nutweite 54, so dass zwischen den Anfangsabschnitt 38 der Feder 12 und dem flächigen Rahmen 16 der Nut 10 ein Spiel 60 vorhanden ist. Die Dicke 58 der Feder 12 ist geringfügig kleiner als die Nutweite 56 des Zentrierabschnitts 32 der Nut 10.

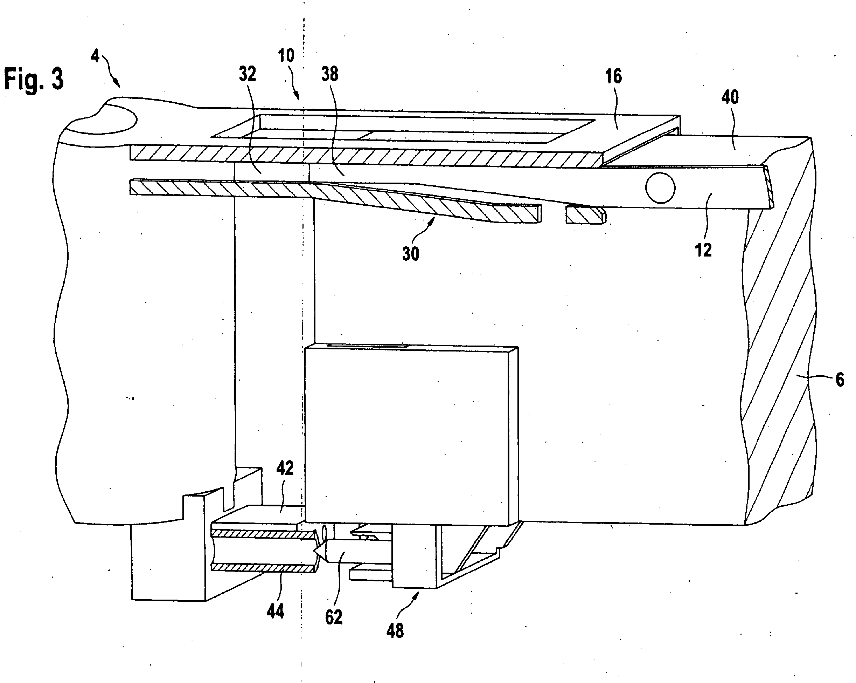

In Figur 3 ist der Anfangsabschnitt 38 der Feder 12 bereits teilweise in den Zentrierabschnitt 32 der Nut 10 eingeführt. Dadurch wird die Feder 12 und somit auch der Lenkstockschalter 6 relativ zum Modulträger 4 ausgerichtet, so dass auch die weiblichen elektrischen Kontaktmittel 42 am Modulträger 4 und die männlichen elektrischen Kontaktmittel 48 am Lenkstockschalter 6 relativ zueinander ausgerichtet werden. Benachbart zu den männlichen elektrischen Kontaktmitteln 48 sind zwei Zentrierstecker vorgesehen, von denen in Figur 3 lediglich der vordere Zentrierstecker 62 dargestellt ist. Der Zentrierstecker 62 ist zum Eingriff in die Zentrierhülse 44 geeignet.

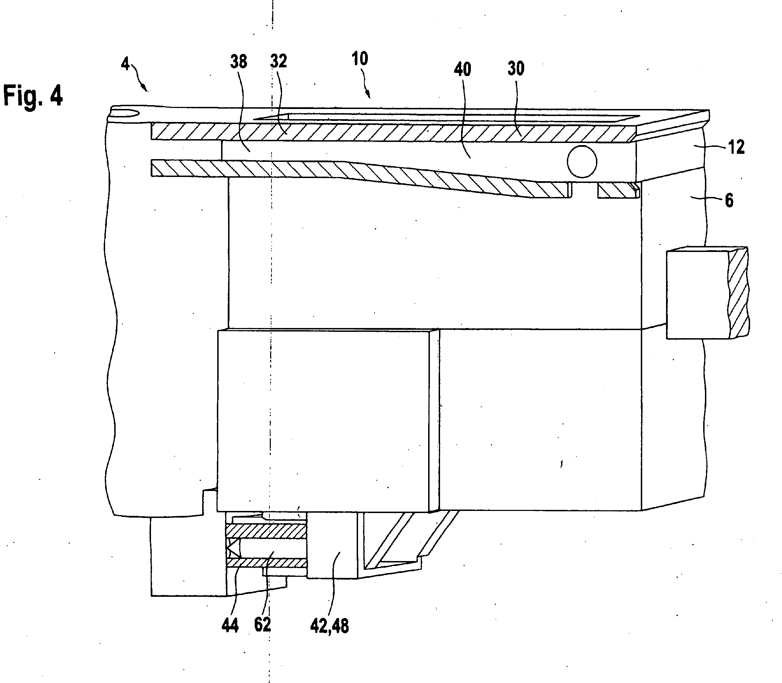

In Figur 4 ist die Feder 12 des Lenkstockschalters 6 vollständig in die Nut 10 des Modulträgers 4 eingeführt. Somit kommt der Anfangsabschnitt 38 der Feder 12 vollständig und im Wesentlichen spielfrei in Eingriff mit dem Zentrierabschnitt 32 der Nut 10. Ferner ist der konisch ausgebildete Endabschnitt 40 der Feder 12 vollständig und im Wesentlichen spielfrei im Anschnäbelabschnitt 30 der Nut 10 aufgenommen.

In Figur 4 ist ebenfalls dargestellt, dass der Zentrierstecker 62 vollständig in der Zentrierhülse 44 aufgenommen ist. Somit ist die elektrische Kontaktierung zwischen den weiblichen elektrischen Kontaktmitteln 42 und den männlichen elektrischen Kontaktmitteln 48 ebenfalls hergestellt.

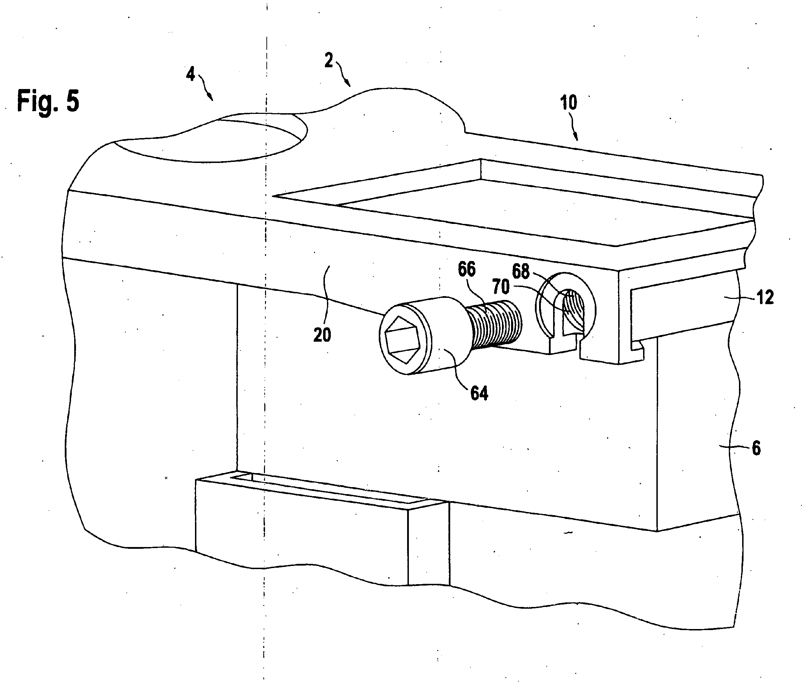

In Figur 5 ist das Lenksäulenmodul 2 mit dem Modulträger 4 und dem Lenkstockschalter 6 im Endmontagezustand gemäß Figur 4 dargestellt. Um den Lenkstockschalter 6 am Modulträger 4 zu sichern, ist eine Sicherungsschraube 64 vorgesehen, die mit einem Gewindeabschnitt 66 eine Durchbrechung 68 in der Seitenwange 20 der Nut 10 durchsetzen kann. In der Feder 12 ist ein Gewindesackloch 70 vorgesehen, dass in axialer Richtung mit der Durchbrechung 68 und mit der Längsachse der Sicherungsschraube 64 fluchtet. Durch Einsatz der Sicherungsschraube 64 in das Gewindesackloch 70 kann die Feder 12 innerhalb der Nut 10 gesichert werden.

## Patentansprüche

1. Lenksäulenmodul (2), insbesondere für Kraftfahrzeuge, mit einem auf die Lenksäule aufsetzbaren Modulträger (4) und mit mindestens einem Betätigungsmodul (6), wobei der Modulträger (4) mindestens einen zur Aufnahme eines Betätigungsmoduls (6) geeigneten Aufnahmebereich (10) aufweist, und wobei das Betätigungsmodul (6) einen Eingriffsbereich (12) zum Eingriff in den Aufnahmebereich (10) des Modulträgers (4) aufweist, wobei der der Aufnahmebereich (10) des Modulträgers (4) und der Eingriffsbereich (12) des Betätigungsmoduls (6) eine Nut-Feder-Verbindung bilden und wobei ein Sicherungselement (64) vorgesehen ist, mit dem die Verbindung zwischen Betätigungsmodul (6) und Modulträger (4) sicherbar ist, **dadurch gekennzeichnet, dass** das Sicherungselement (64) eine die Nut (10) bildende Wandung (20) durchsetzt und in der Feder (12) zumindest abschnittsweise aufgenommen ist.

2. Lenksäulenmodul (2) nach Anspruch 1, **dadurch gekennzeichnet, dass** der Aufnahmebereich (10) des Modulträgers (4) eine Schwalbenschwanz- oder T-Nut (10) aufweist, in die das Betätigungsmodul (6) mit seiner als Feder (12) für die Nut (10) ausgebildeten Eingriffsbereich (12) einführbar ist bzw. der Eingriffsbereich (12) des Betätigungsmoduls (6) eine Schwalbenschwanz- oder T-Nut aufweist, in die der als Feder für die Nut ausgebildete Aufnahmebereich (10) des Modulträgers (4) einführbar ist.

3. Lenksäulenmodul (2) nach Anspruch 1 oder 2, **dadurch gekennzeichnet, dass** die Nut (10) einen Anschnäbelabschnitt (30) und einen an diesen angrenzenden Zentrierabschnitt (32) aufweist, wobei der Anschnäbelabschnitt (30) eine größere Nutweite (54) und/oder Nutbreite als der Zentrierabschnitt (32) aufweist, und dass die Feder (12) einen Anfangsabschnitt (38) und einen an diesen angrenzenden Endabschnitt aufweist, wobei der Anfangsabschnitt (38) im Wesentlichen spielfrei im Zentrierabschnitt (32) aufnehmbar ist und der Endabschnitt (40) kleiner als der Anschnäbelabschnitt (30) ist.

4. Lenksäulenmodul (2) nach einem der vorhergehenden Ansprüche, **dadurch gekennzeichnet, dass** der Zentrierabschnitt (32) und/oder Anschnäbelabschnitt (30) der Nut (10) und/oder der Anfangsabschnitt (38) und/oder der Endabschnitt (40) der Feder (12) konisch ausgebildet sind.

5. Lenksäulenmodul (2) nach einem der vorhergehenden Ansprüche, **dadurch gekennzeichnet, dass** der Anschnäbelabschnitt (30) der Nut (10) und/oder der Anfangsabschnitt (38) der Feder (12) Einführhilfen bildende Fasen (50, 52) aufweisen.

6. Lenksäulenmodul (2) nach einem der vorhergehenden Ansprüche, **dadurch gekennzeichnet, dass** der Modulträger (4) elektrische Kontaktmittel (42) aufweist, die dem Betätigungsmodul (6) zugewandt sind.

7. Lenksäulenmodul (2) nach einem der vorhergehenden Ansprüche, **dadurch gekennzeichnet, dass** das Betätigungsmodul (6) elektrische Kontaktmittel (48) aufweist, die dem Modulträger (4) zugewandt sind.

8. Lenksäulenmodul (2) nach Anspruch 6 und 7, **dadurch gekennzeichnet, dass** mit oder sich an die Einführung des Eingriffsbereichs (12) in den Aufnahmebereich (10) anschließend eine elektrische Kontaktierung des Betätigungsmoduls (6) und des Modulträgers (4) erfolgt.

9. Lenksäulenmodul (2) nach Anspruch 8, **dadurch gekennzeichnet, dass** die elektrische Kontaktierung nach Beginn der Einführung des Anfangsabschnitts (38) der Feder (12) in den Zentrierabschnitt (32) der Nut (10) erfolgt.

10. Lenksäulenmodul (2) nach einem der Ansprüche 6 bis 9, **dadurch gekennzeichnet, dass** benachbart zu den elektrischen Kontaktmitteln (42, 48) oder in diese räumlich integriert Zentriermittel (44, 46, 62) vorgesehen sind.

11. Lenksäulenmodul (2) nach Anspruch 10, **dadurch gekennzeichnet, dass** die Zentriermittel als Zentrierhülse (44, 46) und -stift (62) ausgebildet sind.

12. Lenksäulenmodul (2) nach Anspruch 1, **dadurch gekennzeichnet, dass** das Sicherungselement (64) als Schraube (64) oder Rastverbindung ausgebildet ist.

13. Lenksäulenmodul (2) nach einem der vorhergehenden Ansprüche, **dadurch gekennzeichnet, dass** das Betätigungsmodul (6) als Lenkstockschalter (6) ausgebildet ist.

## Claims

1. Steering-column module (2), in particular for motor vehicles, having a module carrier (4) which can be placed onto the steering column and having at least one actuating module (6), the module carrier (4) having at least one receiving region (10) which is suitable for receiving an actuating module (6), and the actuating module (6) having an engagement region (12) for engagement into the receiving region (10) of the module carrier (4), the receiving region (10) of the module carrier (4) and the engagement region (12) of the actuating module (6) forming a tongue and groove connection and a securing element (64) being provided, by way of which the connection between the actuating module (6) and the module carrier (4) can be secured, **characterized in that** the securing element (64) penetrates a wall (20), which forms the groove (10), and is received at least in sections in the tongue (12).

2. Steering-column module (2) according to Claim 1, **characterized in that** the receiving region (10) of the module carrier (4) has a dovetail groove or T-groove (10), into which the actuating module (6) can be inserted with its engagement region (12) which is configured as a tongue (12) for the groove (10), or the engagement region (12) of the actuating module (6) has a dovetail groove or T-groove, into which the receiving region (10) of the module carrier (4) can be inserted, which receiving region (10) is configured as a tongue for the groove.

3. Steering-column module (2) according to Claim 1 or 2, **characterized in that** the groove (10) has a meshing section (30) and a centring section (32) which adjoins it, the meshing section (30) having a greater groove width (54) and/or groove breadth than the centring section (32), and **in that** the tongue (12) has a starting section (38) and an end section which adjoins it, it being possible for the starting section (38) to be received substantially without play in the centring section (32), and the end section (40) being smaller than the meshing section (30).

4. Steering-column module (2) according to one of the preceding claims, **characterized in that** the centring section (32) and/or meshing section (30) of the groove (10) and/or the starting section (38) and/or the end section (40) of the tongue (12) are/is of conical configuration.

5. Steering-column module (2) according to one of the preceding claims, **characterized in that** the meshing section (30) of the groove (10) and/or the starting section (38) of the tongue (12) have/has bevels (50, 52) which form insertion aids.

6. Steering-column module (2) according to one of the preceding claims, **characterized in that** the module carrier (4) has electric contact means (42) which face the actuating module (6).

7. Steering-column module (2) according to one of the preceding claims, **characterized in that** the actuating module (6) has electric contact means (48) which face the module carrier (4).

8. Steering-column module (2) according to Claim 6 or 7, **characterized in that** electric contact is made with the actuating module (6) and the module carrier (4) by way of or following the insertion of the engagement region (12) into the receiving region (10).

9. Steering-column module (2) according to Claim 8, **characterized in that** the electric contact is made after the start of the insertion of the starting section (38) of the tongue (12) into the centring section (32) of the groove (10).

10. Steering-column module (2) according to one of Claims 6 to 9, **characterized in that** centring means (44, 46, 62) are provided adjacent to the electric contact means (42, 48) or spatially integrated into them.

11. Steering-column module (2) according to Claim 10, **characterized in that** the centring means are configured as centring sleeve (44, 46) and centring pin (62).

12. Steering-column module (2) according to Claim 1, **characterized in that** the securing element (64) is configured as a screw (64) or a latching connection.

13. Steering-column module (2) according to one of the preceding claims, **characterized in that** the actuating module (6) is configured as a steering-column switch (6).

## Revendications

1. Module de colonne de direction (2), en particulier pour véhicules automobiles, comprenant un support de module (4) pouvant être posé sur la colonne de direction et au moins un module d'actionnement (6), le support de module (4) présentant au moins une région de réception (10) appropriée pour recevoir un module d'actionnement (6), et le module d'actionnement (6) présentant une région d'engagement (12) pour l'engagement dans la région de réception (10) du support de module (4), la région de réception (10) du support de module (4) et la région d'engagement (12) du module d'actionnement (6) formant une connexion à rainure et languette, et un élément de fixation (64) étant prévu, avec lequel la connexion entre le module d'actionnement (6) et le support de module (4) peut être sécurisée, **caractérisé en ce que** l'élément de fixation (64) traverse une paroi (20) formant la rainure (10) et est reçu au moins en partie dans la languette (12).

2. Module de colonne de direction (2) selon la revendication 1, **caractérisé en ce que** la région de réception (10) du support de module (4) présente une rainure en queue d'aronde ou en T (10), dans laquelle le module d'actionnement (6) peut être inséré avec sa région d'engagement (12) réalisée en tant que languette (12) pour la rainure (10), ou la région d'engagement (12) du module d'actionnement (6) présente une rainure en queue d'aronde ou en T, dans laquelle peut être insérée la région de réception (10) du support de module (4) réalisée sous forme de languette pour la rainure.

3. Module de colonne de direction (2) selon la revendication 1 ou 2, **caractérisé en ce que** la rainure (10) présente une portion de contact en biais (30) et une portion de centrage (32) adjacente à celle-ci, la portion de contact en biais (30) présentant une plus grande largeur de rainure (54) et/ou un écartement de rainure plus grand que la portion de centrage (32), et **en ce que** la languette (12) présente une portion de début (38), et une portion de bout adjacente à celle-ci, la portion de début (38) pouvant être reçue essentiellement sans jeu dans la portion de centrage (32) et la portion de bout (40) étant plus petite que la portion de contact en biais (30).

4. Module de colonne de direction (2) selon l'une quelconque des revendications précédentes, **caractérisé en ce que** la portion de centrage (32) et/ou la portion de contact en biais (30) de la rainure (10) et/ou la portion de début (38) et/ou la portion de bout (40) de la languette (12) sont réalisées sous forme conique.

5. Module de colonne de direction (2) selon l'une quelconque des revendications précédentes, **caractérisé en ce que** la portion de contact en biais (30) de la rainure (10) et/ou la portion de début (38) de la languette (12) présentent des biseaux (50, 52) formant des auxiliaires d'insertion.

6. Module de colonne de direction (2) selon l'une quelconque des revendications précédentes, **caractérisé en ce que** le support de module (4) présente des moyens de contact électriques (42) qui sont tournés vers le module d'actionnement (6).

7. Module de colonne de direction (2) selon l'une quelconque des revendications précédentes, **caractérisé en ce que** le module d'actionnement (6) présente des moyens de contact électriques (48) qui sont tournés vers le support de module (4).

8. Module de colonne de direction (2) selon la revendication 6 ou 7, **caractérisé en ce qu'**un contact électrique du module d'actionnement (6) et du support de module (4) est produit avec ou à la suite de l'insertion de la région d'engagement (12) dans la région de réception (10).

9. Module de colonne de direction (2) selon la revendication 8, **caractérisé en ce que** le contact électrique est établi au début de l'insertion de la portion de début (38) de la languette (12) dans la portion de centrage (32) de la rainure (10).

10. Module de colonne de direction (2) selon l'une quelconque des revendications 6 à 9, **caractérisé en ce que** des moyens de centrage (44, 46, 62) sont prévus à côté des moyens de contact électriques (42, 48) ou sont intégrés spatialement dans ceux-ci.

11. Module de colonne de direction (2) selon la revendication 10, **caractérisé en ce que** les moyens de centrage sont réalisés sous forme de douille de centrage (44, 46) et de goupille de centrage (62).

12. Module de colonne de direction (2) selon la revendication 1, **caractérisé en ce que** l'élément de fixation (64) est réalisé sous forme de vis (64) ou de connexion par encliquetage.

13. Module de colonne de direction (2) selon l'une quelconque des revendications précédentes, **caractérisé en ce que** le module d'actionnement (6) est réalisé sous forme de commutateur de levier de direction (6).
